# EUROPEAN PATENT APPLICATION

(11) **EP 4 822 598 A1**
(43) Date of publication of application: **14.10.2026**
(21) Application number: 25169271.1
(22) Date of filing: 08.04.2025
(51) Int. Cl.: G06N 3/0455, G06N 3/0464, G06N 3/09

(54) **SYSTEM AND METHODS FOR TRAINING AND USING A CONDITIONAL VARIATIONAL AUTOENCODER MODEL**

(71) Applicant: Robert Bosch GmbH, 70442 Stuttgart (DE)
(72) Inventor: Janjos, Faris, 70178 Stuttgart (DE); Ferguson, Nils Oliver, 71263 Weil Der Stadt - Merklingen (DE); Wagner, Joerg, 71272 Renningen (DE); Look, Andreas, 96110 Wiesengiech (DE); Kamenshchikov, Ilya, 52062 Aachen (DE); Manivannan, Denesh Kumar, 71638 Ludwigsburg (DE); Montanier, Jean-Marc, 70597 Stuttgart (DE)

(57) **Abstract**

Methods 400, 500 for training and using a conditional variational autoencoder, CVAE, model 10 for performing a first and a second application task 121, 122 are provided. The CVAE model comprises an encoder-decoder pair 14, 16.1 and a latent space 15.1. The CVAE model is trained on the first application task, resulting in a trained encoder and a trained decoder. The CVAE model further comprises a further decoder 16.2, and is trained on the second application task, using the same latent space, resulting in a further trained encoder and a trained further decoder. The CVAE model comprising the further trained encoder, the trained decoder and the trained further decoder is then outputted as the trained CVAE model.

## Description

### Field of the invention

The presently disclosed subject matter relates to a system for and method of training a conditional variational autoencoder model for performing a first and a second application task. The presently disclosed subject matter further relates to a system, such as a semi-autonomous or autonomous vehicle, and method which use a trained conditional variational autoencoder for performing a first and a second application task. The presently disclosed subject matter further relates to a transitory or non-transitory computer-readable medium comprising data representing instructions, which when executed by a processor system, cause the processor system to perform one or more steps of a method as disclosed.

### Background of the invention

Generative modelling is widely used in machine learning (ML) and artificial intelligence (Al).Many application areas of generative modelling rely on conditional multi-modal generation. Conditional multi-modal generation is a technique in which a generative model generates multiple data outputs according to some pre-specified conditioning, which may be given as input. The multiple data outputs may correspond to multiple modalities, which may correspond to a plurality of application tasks. Using the conditioning, new outputs may be created based on specific conditions or constraints, and novel data may be generated from predetermined categories or from a generic context. This has particularly useful applications in fields where multi-mode decision-making may be involved, such as robotics, in which robotic systems are typically configured to perform various certain application tasks depending on a certain mode of operation, context or situation. Another example is semi-autonomous or autonomous driving, in which vehicle trajectories, steering and braking are decided upon based on the surroundings in an environment and the traffic situation context. The input or inputs to such multi-mode decision making, which may be denoted as x, as well as the output or the outputs of the multi-mode decision making, which may be denoted as y, may be any data type used in the common machine leaning application fields: e.g., text, images, trajectories on manifolds, sound, etc. or combinations thereof. For example, the outputs y may comprise classifications of data, such as images x or detected objects x in an environment. Under suitable assumptions on a probabilistic latent space, a conditional distribution *p*(***y***|***x***) may be modelled in conditional multi-model generation.

A number of existing model frameworks in the area of generative modelling have been adapted for conditional multi-modal generation. For example, Goodfellow et al. (2014) *Generative Adversarial Nets* discuss conditional generative adversarial networks (cGANs), in which a generator and a discriminator of a regular GAN have been conditioned on additional information, such as class labels or textual descriptions. Conditional diffusion models are described in Ho et al. (2020) *Denoising Diffusion Probabilistic Models,* wherein they generate data by iteratively refining a noisy initial input, which is guided by a conditional signal. Conditional diffusion models leverage a diffusion process to progressively denoise the input, from which samples are outputted which adhere to the provided condition.

Another type of generative model framework is formed by the variational autoencoder (VAE) model. In a VAE architecture, an encoder is paired to a decoder, with the connection being formed by a probabilistic latent space, which corresponds to parameters of a variational distribution. Sohn et al. (2015) Learning Structured Output Representation using Deep Conditional Generative Models*,* discuss conditional variational autoencoder (CVAE) models, which extend the general VAE framework by incorporating additional, conditional information into both the encoder and the decoder, such as specific attributes or labels. The CVAE model is conditioned on this information in the data generation. By conditioning the encoder and the decoder in this way, a joint latent space of both input x and output variables y and is learnt, instead of a single variable x as in the generic VAE framework. In general, CVAE models have certain advantages over other classes of models, such as cGANs or diffusion models: they are comparatively easier to train than GANs or diffusion models, and provide an explicitly parameterized probabilistic latent space, which is usually in the form of a Gaussian distribution.

The above discussed adapted framework structures for conditioned generative models have proven to be suitable for conditional multi-modal generation, resulting in typically high-quality, conditional outputs for multiple modes as well as conditional distributions with multiple modes.

### Summary of the Invention

The inventors have nevertheless recognized several issues with the resulting conditioned models from the above discussed adapted model frameworks, as they lack various types of flexibility with respect to the input ***x*** and output variables ***y***. For example, conditioning is only possible in a direction from ***x*** to ***y***; that is, whereas the models may generate multiple data outputs ***y*** according to some pre-specified conditioning given as an input ***x***, they are typically not capable of producing outputs of data type ***x*** given conditionings of data type ***y***. In a similar manner, counterfactual generation is only possible in one direction, namely in a direction from ***x*** to ***y***: the models are capable of generating synthetic outputs of data type ***y*** given a realistic input from data type ***x***, e.g., from real data, as they are capable of modelling the conditional distribution *p*(***y***|***x***). However, the models are typically not capable of generating a synthetic, counterfactual pair (***x, y***), a counterfactual ***x***, or a counterfactual ***y*** given a specific, realistic pair (***x**, **y***)*.* As the state-of-the-art conditioned generative models lack the capability of such counterfactual generation, there is a restricted insight into the reasoning behind predictions of the model, by which parts of the models form black boxes. Especially in conditional multi-modal generation it is important to gain insight into the workings of the model, certainly with respect to the different modalities.

The inventors have identified these challenges and recognized the need for an improved approach that enables a flexible conditional generation and a flexible counterfactual generation as discussed above.

In accordance with a first aspect of the invention, as defined by claim 1, a method is provided for training a conditional variational autoencoder, CVAE, model for performing a first and a second application task. In accordance with a further aspect of the invention, a system is provided as defined by claim 14 in combination with any of claims 1-9. In accordance with a further aspect of the invention, a computer-readable medium is provided as defined by claim 15 in combination with any of claims 1-9.

Briefly speaking, the above measures may involve training a conditional variational autoencoder, CVAE, model for performing a first and a second application task. Here, the CVAE model comprises an encoder-decoder pair and a latent space, the encoder-decoder pair comprising an encoder and a decoder. The training method comprises training the CVAE model on the first application task, resulting in a trained encoder and a trained decoder. The training the CVAE model on the first application task may be performed in a standard, generic manner as known from the prior art on CVAEs, using a classical CVAE framework. This classical CVAE architecture may be extended as follows: interestingly, the CVAE model further comprises a further decoder, and the method further comprises training the CVAE model on the second application task, resulting in a further trained encoder and a trained further decoder. The trained CVAE model for performing the first and the second application task then comprises the further trained encoder, which is trained on both the first and the second application task, the trained decoder, being trained on the first application task, and the trained further decoder, being trained on the second application task.

Interestingly, together with this dual-decoder setup, a same, joint latent space is used for both training procedures on the first and second application tasks. By this, the CVAE model is further enabled to carry out a flexible conditioning. The model may simultaneously learn two conditional generative distributions by way of modelling the joint shared latent space between two data types, say ***x*** and ***y***, which represent a first and second input variables; the distributions then being denoted as *p*(***x***|***y***) and *p*(***y***|***x***). This way, during the training procedure, the joint latent space may model the relationship of the input variables associated with the two data types, ***x*** and ***y***, within a dataset comprising the two data types.

The following discusses the above measures in more detail. The CVAE model may be a generative model. The CVAE model may be a machine learning model. The method of training the CVAE model may be a computer-implemented method. The CVAE model may be trained for performing a first and a second application task; for example, the CVAE model may be trained to control a computer-controlled system, such as a robotic system, a vehicle, such as a semi-autonomous or autonomous vehicle, a domestic appliance, a power tool, a manufacturing machine, a personal assistant and an access-control system, to perform the first and second application tasks. The first and second applicant tasks may be common tasks associated with machine learning application fields, such as text or image classification. For example, an application task may comprise motion prediction of a semi-autonomous or autonomous vehicle. The CVAE model may comprise an encoder-decoder pair and a latent space. The encoder-decoder pair may comprise an encoder and a decoder. The encoder may comprise a neural network, for example a convolutional neural network. The encoder may be configured to map an input which the encoder may receive, e.g., from an input space, into a distribution within the latent space, which is low-dimensional compared to the input space. The decoder may comprise a neural network, for example a convolutional neural network. The decoder may be configured to map an element of the latent space into the input space, according to a distribution, e.g., a distribution in the latent space.

The above measures may further involve training the CVAE model on the first application task. Training the CVAE model on the first application task may comprise accessing a dataset. The dataset may comprise a first type of data. The first data may represent a first input variable. The first input variable may be associated with the first application task; for example, the first type of data may comprise observations, such as sensor-based observations, of an environment of a computer-controlled system, such as a semi-autonomous or autonomous vehicle. The first input variable may be denoted by, e.g., ***x***. The dataset may comprise a second type of data. The second type of data may represent a second input variable. The second input variable may be associated with the second application task; for example, the second type of data may comprise control signals of a computer-controlled system, e.g. for controlling and/or operating the system, such as controlling and/or steering a semi-autonomous or autonomous vehicle along trajectories of the vehicle in an environment. The second input variable may be denoted by, e.g., ***y***. This way, a dataset of (***x**,**y***) is obtained. The first input variable ***x*** and the second input variable ***y*** may be governed by a joint distribution, say, *p*(***x**, **y***)*.* The CVAE may be trained on the first application task by learning a generic conditional distribution of the second input variable ***y*** as a predictive variable given the first input variable as a conditioning variable ***x***: that is, by learning the conditional distribution *p*(***y***|***x***). This first training step may be performed according to a standard, generic CVAE approach of learning a conditional distribution, as follows.

The above measures of training the CVAE model for performing the first application task may further involve generating a conditional prior distribution. The conditional prior distribution may be a distribution of a latent space variable. The latent space variable may be denoted by, e.g., ***z*.** The conditional prior distribution may be conditioned on the first input variable. The conditional prior distribution may be denoted by, e.g., *p*(**z**|***x***). The conditional prior distribution may be called a learned conditional latent space prior distribution. Optionally, the CVAE model may comprise a prior network. The prior network may be a neural network. The prior network may be configured to obtain the conditional prior distribution, e.g., by generating the conditional prior distribution.

The above measures of training the CVAE model for performing the first application task may further involve generating a conditional latent space posterior distribution. The conditional latent space posterior distribution may be a distribution of the latent space variable z. The conditional latent space posterior distribution may be conditioned on the first input variable ***x***. The conditional latent space posterior distribution may further be conditioned the second input variable ***y***. The conditional latent space posterior distribution may be denoted by, e.g., *p*(***z***|***x,y***)*.* The conditional latent space posterior distribution may be generated using the encoder of the CVAE model. This way, the conditional latent space posterior distribution may be realized via a neural network. In the training of the CVAE model, the conditional latent space posterior distribution may be learnt this way. The conditional latent space posterior distribution *p*(***z***|***x,y***) may be called a joint latent space posterior distribution, as the first input variable ***x*** and the second input variable y may be governed by a joint distribution and the joint latent space posterior distribution of the latent space variable ***z*** may be conditioned on both input variables ***x*** and ***y***.

The above measures of training the CVAE model for performing the first application task may further involve obtaining a statistical distance. The statistical distance may be a statistical distance between the conditional prior distribution *p*(***z*** | ***x***) and the conditional latent space posterior distribution *p*(***z*** |***x*,*y***). The statistical distance may be obtained using a statistical measure. The statistical measure may be a measure of how much probability distributions differ from each other. The statistic distance may comprise the Kullback-Leibler divergence *D_{KL}*(*·*∥·). The statistical distance between the conditional prior distribution *p*(***z*** | ***x***) and the conditional latent space posterior distribution *p*(***z*** |***x,y***) may be denoted by *D_{KL}*(*p*(***z***|***x,y***)∥*p*(***z***|x*)***)**. The conditional latent space posterior distribution *p*(***z*** | ***x,y***) may then be matched against the conditional prior distribution *p*(***z*** | ***x***) via the statistical distance.

The above measures of training the CVAE model for performing the first application task may further involve obtaining a latent space variable samples, which may be denoted by ***z***, from the conditional latent space posterior distribution *p*(***z***l***x,y***). Given such a latent space sample ***z***, a novel output of data type ***y*** may be generated. Such a novel output of data type ***y*** may be generated by the CVAE model. Such a novel output of data type ***y*** may be generated by a dedicated component. The dedicated component may comprise the decoder. This way, a conditional distribution may be generated. The conditional distribution may be a distribution of the second input variable ***y**.* The conditional distribution may be conditioned on the latent space variable ***z***. The conditional distribution may be denoted by *p*(***y***|***z***). The conditional distribution may be generated using the decoder. The conditional distribution may be generated based on the obtained latent space variable sample. Optionally, the conditional distribution is further conditioned on the first input variable ***x***. Then, the conditional distribution may be denoted by *p*(***y***|***z,x***)*.* The measures of training the CVAE model for performing the first application task may further involve obtaining second input variable samples, which may be denoted by **y***,* from the conditional distribution *p*(***y***|***z***). The second input variable samples may be obtained from the dedicated component, e.g., from the decoder. Optionally, the CVAE model may comprise a generator. The generator may be a network, such as a neural network. The generator may be configured to obtain the second input variable samples, e.g., by generating the second input variable samples. The generator may be a decoder, e.g., the decoder.

The above measures of training the CVAE model for performing the first application task may further involve minimizing a loss function. The loss function and/or minimizing the loss function may be based on the obtained second input variable samples, and/or on the statistical distance. The loss function may be a reconstruction loss function. The loss function may be a standard loss function associated with a CVAE, and/or may comprise an Evidence Lower Bound (ELBO). For example, the loss function may be given as $\begin{matrix}{L}_{CVAE} = {L}_{Rec} + {L}_{KL} \\ = {E}_{y ∼ p \left(y\left|z\right.\right)} \left|\left|y-y*\right|\right| + {D}_{KL} \left(p\left(z\left|x, y\right.\right)\left‖p\left(z\left|x\right.\right)\right.\right)\end{matrix}$

The loss function may be constructed in such a way, that a loss function term comprises a reconstruction term taking the output of *p*(***y***|***z***) and penalizing its deviation from a real ***y***. Here, this first term may be an expectation value. The expectation value may be an expectation value with respect to obtained second input variable samples ***y*** from the conditional distribution *p*(***y***|***z***), which may be obtained from the decoder. The expectation value may be an expectation of a distance, such as a mean-squared error, between the second input variable, e.g. by way of obtained second input variable samples, and a reference value, such as ground truth data and/or a value following a Gaussian distribution, for the respective second input variable. The ground truth data may be realistic data, e.g., observed data. Additionally, a loss function term may be constructed which penalizes the Kullback-Leibler divergence between the distributions *p*(***z***|***x,y***) and *p*(***z***|***x***). Here, this second term may be a Kullback-Leibler distance, as discussed above. The measures of training the CVAE model for performing the first application task may further involve obtaining a trained encoder and a trained decoder. The trained encoder and decoder may be obtained from minimizing the loss function. The trained encoder and the trained decoder may then be trained on the first application task following the above measures for the first training step.

Interestingly, the CVAE model may further comprise a further decoder. The further decoder may comprise a neural network, such as a convolutional network. Just like the decoder, the further decoder may be configured to map an element of the latent space into the input space, according to a distribution, e.g., a distribution in the latent space. The method of training the CVAE model for performing the first application task and the second application task may further involve the following measures. The CVAE may be further trained on the second application task. The CVAE may be trained on the second application task by learning a generic conditional distribution of the first input variable x as a predictive variable given the second input variable as a conditioning variable y: that is, by learning the conditional distribution *p*(***x***|***y***). This second training step may be performed according to the following extension to the standard, generic CVAE approach of learning a conditional distribution as discussed in the above measures.

The above measures of training the CVAE model for performing the second application task may involve generating a further conditional prior distribution. The further conditional prior distribution may be a distribution of the latent space variable ***z*.** The further conditional prior distribution may be conditioned on the second input variable. The further conditional prior distribution may be denoted by, e.g., *p*(***z***|***y***). The further conditional prior distribution may be called an additional learned conditional latent space prior distribution. Optionally, the CVAE model may comprise a further prior network. The further prior network may be a neural network. The further prior network may be configured to obtain the further conditional prior distribution, e.g., by generating the further conditional prior distribution. The further prior network may be the same as the prior network for the conditional prior distribution, or a different prior network.

The above measures of training the CVAE model for performing the second application task may further involve obtaining a further statistical distance. The further statistical distance may be a statistical distance between the further conditional prior distribution *p*(***z*** | ***y***) and the conditional latent space posterior distribution *p*(***z*** | ***x,y***). The further statistical distance may be obtained using the same statistical measure as for the statistical distance. The statistic distance may comprise the Kullback-Leibler divergence *D_{KL}*(·∥·). The statistical distance between the further conditional prior distribution *p*(***z*** | ***y***) and the conditional latent space posterior distribution *p*(***z*** | ***x,y***) may be denoted by *D_{KL}*(*p*(***z***|***x,y***)∥*p*(***z***|***y***)). The conditional latent space posterior distribution *p*(***z*** | ***x,y***) may then be matched against the further conditional prior distribution *p*(***z*** | ***y***) via the statistical distance.

The above measures of training the CVAE model for performing the second application task may further involve, based on an obtained latent space variable sample ***z*** from the conditional latent space posterior distribution *p*(***z***|***x***,***y***), generating a further conditional distribution. Given an obtained latent space sample ***z***, a novel output of data type ***x*** may be generated. Such a novel output of data type ***x*** may be generated by the CVAE model. Such a novel output of data type ***x*** may be generated by a dedicated component. The dedicated component may comprise the further decoder. The dedicated component may be called an additional decoder network. This way, the further conditional distribution may be generated. The further conditional distribution may be a distribution of the first input variable ***x***. The further conditional distribution may be conditioned on the latent space variable ***z***. The further conditional distribution may be denoted by *p*(***x***|***z***)*.* The further conditional distribution may be generated using the further decoder. The further conditional distribution may be generated based on the obtained latent space variable samples. Optionally, the further conditional distribution is further conditioned on the second input variable ***y***. Then, the conditional distribution may be denoted by *p*(***x***|***z**,**y***)*.* The measures of training the CVAE model for performing the second application task may further involve obtaining first input variable samples, which may be denoted by ***x***, from the further conditional distribution *p*(***x***|***z***). The first input variable samples may be obtained from the dedicated component, e.g., from the further decoder. Optionally, the CVAE model may comprise a further generator. The further generator may be a network, such as a neural network. The further generator may be configured to obtain the first input variable samples, e.g., by generating the first input variable samples. The further generator may be the same as the generator for the second input variable samples, or a different generator. The further generator may be a decoder, e.g., the further decoder.

The above measures of training the CVAE model for performing the second application task may further involve minimizing a further loss function. The further loss function and/or minimizing the further loss function may be based on the loss function, the obtained first input variable samples, and/or on the further statistical distance. The further loss function may comprise a Kullback-Leibler distance, and/or an ELBO. The further loss function may be a reconstruction loss function, e.g., an auxiliary reconstruction loss function, which may serve as an extension to the loss function *L_{CVAE}*: for example, the loss function may be given as $\begin{matrix}{L}_{{CVAE}_{ex}} = {L}_{CVAE} + {L}_{{Rec}_{ex}} + {L}_{{KL}_{ex}} \\ = {L}_{CVAE} + {E}_{x ∼ p \left(x\left|z\right.\right)} \left|\left|x-x*\right|\right| + {D}_{KL} \left(p\left(z\left|x, y\right.\right)\left‖p\left(z\left|y\right.\right)\right.\right)\end{matrix}$

The loss function may be constructed in such a way, that a loss function term comprises a reconstruction term taking the output of *p*(***x***|***z***) and penalizing its deviation from a real ***x***. Here, this second term may be an expectation value. The expectation value may be an expectation value with respect to obtained first input variable samples ***x*** from the further conditional distribution *p*(***x***|***z***), which may be obtained from the further decoder. This way, an output of the further decoder, e.g., the further conditional distribution *p*(***x***|***z***), may be used within an auxiliary reconstruction loss function which favours reconstruction of ***x*** from the obtained latent space variable sample ***z*** from the conditional latent space posterior distribution *p*(***z***|***x*,*y***). This way, the further decoder may contribute to an additional training of the conditional latent space posterior distribution *p*(***z***|***x*,*y***) by utilizing obtained latent space variable sample ***z*** for different application tasks. In the further loss function, the expectation value may be an expectation value with respect to obtained first input variable samples ***x*** from the conditional distribution *p*(***x***|***z***), which may be obtained from the further decoder. The expectation value may be an expectation of a distance, such as a mean-squared error, between the first input variable, e.g. by way of obtained first input variable samples, and a reference value, such as ground truth data and/or a value following a Gaussian distribution, for the respective first input variable. The ground truth data may be realistic data, e.g., observed data. Additionally, a loss function term may be constructed which penalizes the Kullback-Leibler divergence between the distributions *p*(***z***|***x,y***) and *p*(***z***|***y***). Here, this third term may be a Kullback-Leibler distance, as discussed above. The measures of training the CVAE model for performing the second application task may further involve obtaining a further trained encoder and a trained further decoder. The further trained encoder and trained further decoder may be obtained from minimizing the further loss function. Then, the further trained encoder may be further trained on the second application task, and the trained further decoder may be trained on the second application task, following the above measures for the second training step.

The above measures of training the CVAE model for performing the first and the second application task may further involve outputting the CVAE model. The CVAE model may comprise the further trained encoder, the trained decoder and the trained further decoder. The CVAE model may then be outputted as the trained CVAE model.

The above measures may be based on the insight that, considering the classical CVAE framework, wherein a CVAE is used to learn a generic conditional distribution of a predictive variable ***y*** given a conditioning ***x***, the classical CVAE architecture may be extended with a further decoder, whilst using the same, joint latent space, and the standard CVAE training framework may be additionally extended with the abovementioned further measures as an additional training step, on the basis of the further conditional prior distribution *p*(***z*** | ***y***) and the further conditional distribution *p*(***x*** | ***z***)*.* This additional training step further adapts the training method to a multimodal variant, wherein a CVAE model is trained on various application tasks, as the conditional latent space posterior distribution *p*(***z*** | ***x,y***) is additionally trained, via the utilized latent space variable samples ***z***, on the different application tasks. This enables an efficient as well as flexible conditional multimodal generation by a generative model, namely a CVAE model, as follows.

The following observations form the main advantages of the above measures. First, due to the usage of the same, joint, shared latent space for both input variables ***x*** and ***y***, this latent space may be trained in a more comprehensive manner in the multi-modal setting, wherein the CVAE model is trained for multiple tasks. The usage of the above-discussed extended, multi-task reconstruction training set-up for conditional multi-modal generation, with the further loss function *L_{CVAEₑₓ}* as extension of the loss function *L_{CVAE},* which is used in a standard, single-task reconstruction set-up for standard CVAEs in conditional generation, leads to a contribution to an improved performance of CVAEs in standard conditional generation tasks.

Secondly, due to the dual-decoder set-up in combination with the joint, shared latent space for ***x*** and ***y***, a flexible conditioning is enabled. The CVAE model which is trained is may simultaneously learn two conditional generative distributions *p*(***x***|***y***) and *p*(***y*|*x***) by way of modelling the joint shared latent space between the data types ***x*** and ***y*** in a more comprehensive manner than the existing, state-of-the-art CVAE models, as explained above. Furthermore, due to this flexibility in conditioning, the resulting generative model is enabled to flexibly generate a counterfactual pair of a synthetic pair (***x***,***y***), a counterfactual ***x***, and/or a counterfactual ***y*** given a specific realistic (***x**, **y***) pair. Especially in conditional multi-modal generation is the capability of such counterfactual generation useful, as generating counterfactuals generally is performed by minimally modifying given inputs such that the modified input will yield a different output in the performing of a certain application task out of the multiple application tasks by the generative model; e.g., being classified into a different class in a classification task. By rendering such a multi-task model capable of such counterfactual generation, these various types of generated counterfactuals may provide valuable insights into the reasonings and operating behind the multi-mask model's complex predictions and output generation, as it is then possible to see which inputs and modified inputs could significantly influence the model's various types of outcomes. Next to the general, conditional multi-model generation, the enables types of counterfactual generation are of course useful in counterfactual dataset generation, by possibly feeding generated counterfactuals back into the model and regenerating a counterfactual output based on a previously generated counterfactual output as a new input.

Thirdly, the above-discussed setup according to the above measures allows, due to its flexibility, for various augmentation possibilities of the model; in particular, for extensions toward any number of conditioning variables ***x***₁, ***x***₂, ... and predictive variables ***y***₁, ***y***₂, ... For example, an extension to incorporating another variable w may lead to the training of a conditional latent space posterior distribution *p*(***z*|*x,y,w***)*,* with an additional conditional prior distribution *p*(***z***|***x,w***) and an additional conditional distribution *p*(***y***|***z***), who may, optionally, additionally be conditioned on x and/or w. Following the above-discussed measures, an additional further conditional prior distribution *p*(***z*** |***y,w***)*,* another additional further conditional prior distribution *p*(***z*** |***x,y***)*,* an additional further conditional distribution *p*(***x***|***z***) and another additional further conditional distribution *p*(***w***|***z***), with corresponding loss terms for a reconstruction loss term and KL divergence term for an additional further loss function which may be constructed, analogously to the above-discussed terms. This may done buy incorporating an additional decoder in the CVAE model architecture. Accordingly, for every additional input an corresponding additional prior distribution and additional decoder may be introduced. This extendibility of the model is of course very useful for augmentation possibilities in multi-task and multi-modal training and generation.

In accordance with a further aspect of the invention, as defined by claim 10, a method is provided for using a CVAE model for performing a first and a second application task of a computer-controlled system, wherein the CVAE model is, and/or has been trained using a method according to the abovementioned measures. In accordance with a further aspect of the invention, a system is provided as defined by claim 14 in combination with any of claims 10-13. In accordance with a further aspect of the invention, a computer-readable medium is provided as defined by claim 15 in combination with any of claims 10-13.

The above measures may involve performing the first application task of the computer-controlled system using the decoder of the trained CVAE model. The above measures may further involve performing the second application task of the computer-controlled system using the further decoder of the trained CVAE model. Optionally, performing the different application tasks may be carried out in corresponding different operation modes of the computer-controlled system. Between these different operation modes may be switched, e.g., by the computer-controlled system. The above measures may contribute to an improved performance and functionality of the trained CVAE model in performing the application tasks, as well as generally in condition multi-modal generation tasks. The above-discussed main advantages of the measures and steps in the discussed training method also mainly hold for the inference method of using the trained CVAE model.

It will be appreciated by those skilled in the art that two or more of the above-mentioned embodiments, implementations, and/or optional aspects of the invention may be combined in any way deemed useful.

Modifications and variations of any device, system, network, computer-implemented method and/or any computer readable medium, which correspond to the described modifications and variations of another of such entities, can be carried out by a person skilled in the art on the basis of the present description.

### Brief description of the drawings

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
**Fig. 1a** shows an example of a computer-controlled system;
**Fig. 1b** shows an example of an autonomous or semi-autonomous vehicle;
**Fig. 2a** shows an architecture of an example of a conditional variational autoencoder, CVAE, model;
**Fig. 2b** shows an architecture of an example of an inverted CVAE model;
**Fig. 3a** shows a high-level illustration of an example of a CVAE model involving a double CVAE according to an embodiment;
**Fig. 3b** shows a detailed architecture of a CVAE model involving a double decoder according to an embodiment;
**Fig. 4** shows a method of training a CVAE model for performing a first and a second application task according to an embodiment;
**Fig. 5** shows a method of using a CVAE model for performing a first and a second application task according to an embodiment;
**Fig. 6a** shows a computer-readable medium having a writable part comprising a computer program according to an embodiment; and
**Fig. 6b** shows a representation of a processor system according to an embodiment.

### Reference signs list

The following list of references and abbreviations is provided for facilitating the interpretation of the drawings and shall not be construed as limiting the claims.
- 10: conditional variational autoencoder (CVAE) model
- 11.1: driving context
- 11.2: ground-truth trajectory
- 12.1: first type of input data
- 12.2: second type of input data
- 13.1: prior network
- 13.2: further prior network
- 14: encoder
- 15.1: latent space
- 15.2, 15.3: further latent spaces
- 16.1: decoder
- 16.2: further decoder
- 17: training
- 18.1: inference
- 18.2: further inference
- 19.1: trajectories
- 19.2: driving context
- 21: ground-truth trajectory
- 22: driving context
- 23: encoder
- 24: prior network
- 25: decoder
- 26: training
- 27: inference

- 31: past driving context
- 32: future ground-truth trajectory
- 33: a first CVAE model
- 34: a second CVAE model
- 35: switch
- 36: predicted future trajectories
- 37: semi-predicted past driving context

- 100: vehicle, autonomous or semi-autonomous vehicle
- 110: computer-controlled system
- 111: processor system
- 112: memory, data storage
- 113: communication interface
- 114: automated or semi-automated driving system
- 115: image sensor
- 116: pedestrian
- 121: first application task
- 122: second application task

- 200: CVAE model
- 210: inverted CVAE model
- 300: double CVAE model

- 400: method of training a CVAE model
- 410: training the CVAE model on the first application task
- 411: accessing a dataset
- 412: generating a conditional prior distribution
- 413: generating a conditional latent space posterior distribution
- 414: obtaining a statistical distance
- 415: obtaining latent space variable samples
- 416: generating a conditional distribution
- 417: obtaining second input variable samples
- 418: minimizing a loss function
- 420: training the CVAE model on the second application task
- 421: generating a further conditional prior distribution
- 422: obtaining a further statistical distance
- 423: generating a further conditional distribution
- 424: obtaining first input variable samples
- 425: minimizing a further loss function
- 430: outputting the trained CVAE model
- 440: updating model parameters during training

- 500: method of using a CVAE model
- 510: performing the first application task
- 520: performing the second application task
- 530: switching
- 540: generating a conditional prior distribution
- 550: generating a further conditional prior distribution
- 560: generating one or more conditional distributions
- 570: generating counterfactual data for the CVAE model
- 580: generating training data

- 1000: optical storage device
- 1001: memory card
- 1020, 1021: stored data

- 1110: subsystems or components
- 1120: processing subsystem
- 1122: memory
- 1124: dedicated integrated circuit
- 1126: communication interface
- 1130: interconnect
- 1140: processor system

### Detailed description of embodiments

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

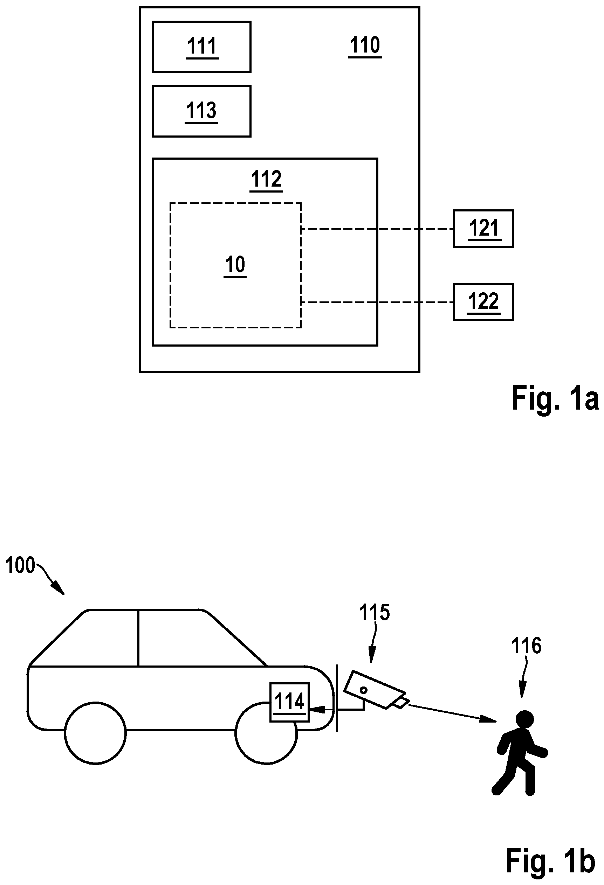

**Fig. 1a** shows an example of a computer-controlled system 110. For example, computer-controlled system 110 may comprise one or more of a robotic system 110, a vehicle, such as a semi-autonomous or autonomous vehicle, a domestic appliance, a power tool, a manufacturing machine, a personal assistant and an access-control system. Computer-controlled system 110 may be for use in a automated or semi-automated vehicle. Another computer-controlled system 110 for performing multiple application tasks, for example in the field of automated technology, robotics, and/or automated driving, may also be considered. Computer-controlled system 110 may comprise a processor 111, a memory 112, and a communication interface 113. Memory 112 may store instructions that, when executed by processor system 111, cause processor system 111 to perform operations for executing a method according to an embodiment, such as using a trained CVAE model 10. Computer-controlled system 110 may comprise a communication interface 113, e.g., to communicate with, e.g., a sensor and/or another communication interface of a system, such as another computer-controlled system. Communication interface 113 may be selected from various alternatives. For example, the interface 113 may be a network interface to a local or wide area network, e.g., the Internet, a storage interface to an internal or external data storage, an application interface (API), etc. Memory 112 may comprise a storage, e.g., electronic storage, magnetic storage, etc. The storage may comprise local storage, e.g., a local hard drive or electronic memory. The storage may comprise non-local storage, e.g., cloud storage. In the latter case, the storage may comprise a storage interface to the non-local storage. The storage may comprise multiple discrete sub-storages together making up memory 112. The storage may comprise non-transitory storage. For example, the storage may store data in the presence of power such as a volatile memory device, e.g., a Random Access Memory (RAM). For example, memory 112 may store data in the presence of power as well as outside the presence of power such as a non-volatile memory device, e.g., Flash memory. Memory 112 may comprise a non-volatile non-writable part, e.g., ROM, e.g., storing part of the software. The execution of computer-controlled system 110, which may comprise the execution of a method according to an embodiment, such as using a trained CVAE model 10, may be implemented in processor system 111. Computer-controlled system 110 may comprise functional units to implement aspects of embodiments. The functional units may be part of the processor system 111. For example, functional units shown herein may be wholly or partially implemented in computer instructions that are stored in a storage 112 of the computer-controlled system 110 and executable by the processor system 111. The processor system 111 may comprise one or more processor circuits, e.g., microprocessors, CPUs, GPUs, etc. Computer-controlled system 110 may comprise multiple processors. A processor circuit may be implemented in a distributed fashion, e.g., as multiple sub-processor circuits. For example, computer-controlled system 110 may use cloud computing. Computer-controlled system 110 may comprise a microprocessor which executes appropriate software stored at the device; for example, that software may have been downloaded and/or stored in a corresponding memory, e.g., a volatile memory such as RAM or a non-volatile memory such as Flash. Instead of using software to implement a function, computer-controlled system 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, computer-controlled system 110 may comprise circuits, e.g., for cryptographic processing, and/or arithmetic processing. In hybrid embodiments, functional units are implemented partially in hardware, e.g., as coprocessors, and partially in software stored and executed on the device.

Memory or data storage 112 may store CVAE model 10. CVAE model 10 may have been trained according to an embodiment of a training method. CVAE model 10 may be configured to perform a first and a second application tasks 121, 122. CVAE model 10 may have been trained. CVAE model 10 may have been trained according to an embodiment. Memory 112 may store CVAE model 10 the form of model data, the model data defining the CVAE model 10, e.g., via their architecture. For example, memory 112 may store model parameters. Memory 112 may store a plurality of model parameters constituting the CVAE model 10. The CVAE model 10 may comprise a plurality of model parameters. The plurality of model parameters may comprise a number of, for example at least one million, for example, at least two million, at least five million, at least ten million, twenty million, at least fifty million model parameters. The plurality of model parameters may, for example, comprise a number of at least a hundred million, at least two hundred million, at least five hundred million, at least a billion million, two billion, at least five billion, at least ten billion, at least twenty billion, at least fifty billion, a hundred billion, two hundred billion, five hundred billion, or at least a trillion model parameters.

The one or more processors 111 may be configured to, in a certain operation mode, use the CVAE model 10 for performing one of the first and the second applications task 121, 122 of the computer-controlled system 110. The one or more processors 111 may be configured to, in another certain operation mode, switch to performing another one of the first and the second application tasks 121, 122. of the computer-controlled system 110. Computer-controlled system 110 may be part of a multi-purpose and/or multi-task system. Computer-controlled system 110 may be embedded, comprised, incorporated and/or integrated in such a system. Computer-controlled system 110 may serve a specific purpose, such as assisted driving of a semi-autonomous or autonomous vehicle, which comprises the execution of one or more particular application tasks 121, 122 within the applications of the larger system. Computer-controlled system 110 may be configured to perform multiple particular application tasks 121, 122. To this end, Computer-controlled system 110 may comprise the CVAE model 10, together with instructions for executing the CVAE model 10. CVAE model 10 may be trained to control computer-controlled system 110 to perform the first 121 and second application tasks 122. A first application task 121 may comprises an object detection or a line detection in an environment, such as the driving context of a vehicle, and the second application task 122 may comprise a motion prediction based on the object detection or the line detection in the environment, such as a trajectory generation for the vehicle based on the driving context of the vehicle. One of the first 121 and the second application tasks 122 my comprise a classification task of the sensor data, such as an image classification, or performing a semantic segmentation on the sensor data, and/or another of the first 121 and the second application tasks 122 may comprise a regression task, such as a regression analysis regarding a distance, a velocity, and/or an acceleration of an object in the sensor data. The first application task 121 may comprise a data generation task, and/or the second application task 122 may comprise anomaly detection, e.g. an anomaly detection in generated data. The first application task 121 may comprise an anomaly detection in input data, e.g., sensor data, and the second application task 122 may comprises a data-generation task based on the anomaly detection, such as a data reconstruction of, e.g., data in the sensor data. The first application task 121 may comprise a generation and/or reconstruction of additional control signals of a same data type as input data, e.g., sensor data, for controlling and/or operating a computer-controlled system 110. The second application task 122 may comprise controlling and/or operating the computer-controlled system 110 based on the generation and/or the reconstruction, such as switching from a first operation mode to a second operation mode.

**Fig. 1b** shows an example of an autonomous or semi-autonomous vehicle 100. Autonomous or semi-autonomous vehicle 100 may comprise and/or constitute a multi-task system. Autonomous or semi-autonomous vehicle 100 may comprise a computer-controlled system 110 according to an embodiment. Computer-controlled system 110 may comprise the automated or semi-automated vehicle 100, or may be integrated in the automated or semi-automated vehicle 100. Autonomous or semi-autonomous vehicle 100 may further comprise an image sensor 115, such as a video camera 115. Image sensor 115 may be connected to computer-controlled system 110. Image sensor 115 and/or computer-controlled system 110 may be configured to classify sensor data, and/or detect objects in the sensor data, e.g., traffic participants 116, such as pedestrians, or other objects such as traffic signs, road surfaces, and/or other vehicles. Image sensor 115 may communicate such a detection with computer-controlled system 110. Steering, braking, object detection, motion prediction of the vehicle 100, and/or performing other controlling and/or operating actions on the vehicle 100 to, e.g., take road signs and/or road surfaces into account and/or avoid other traffic participants 116 form examples of application tasks 121, 122 of a computer-controlled system 110. Other types of automated or semi-automated vehicles 100 may comprise autonomous or semi-autonomous aircrafts, such as aeroplanes.

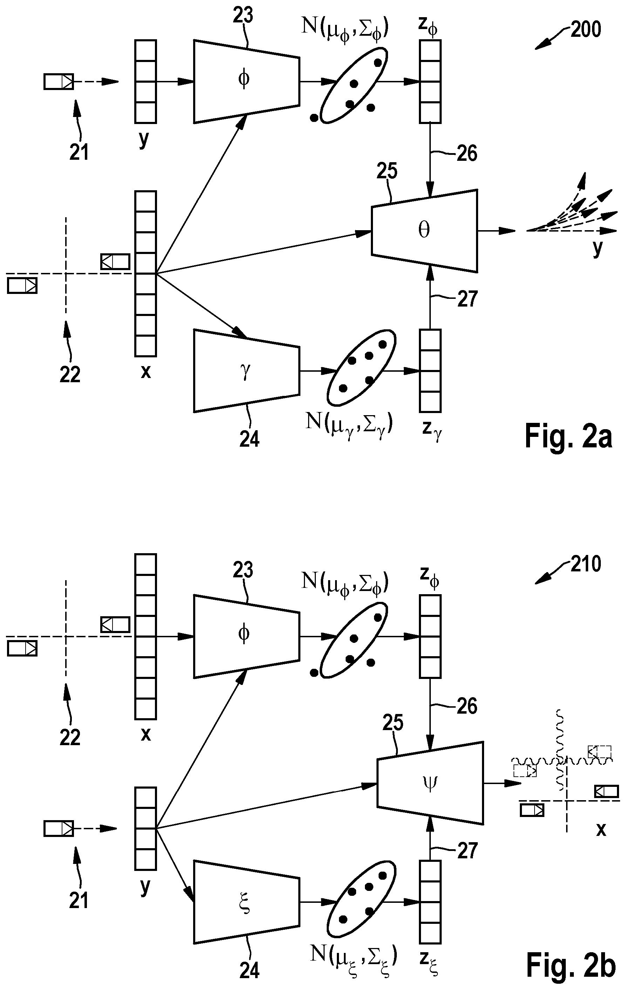

**Fig. 2a** shows an architecture of an example of a conditional variational autoencoder, CVAE, model 200. CVAE model 200 may comprise a standard CVAE framework according to the state of the art. As has been discussed, a CVAE model 200 generally comprises an encoder-decoder pair 23, 25 and a latent space. The encoder-decoder pair 23, 25 may comprise an encoder 23 and a decoder 25. The latent space is here denoted by 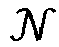 (**µ***_{ϕ},***Σ***_{ϕ}*), which normal distribution serves as the latent space posterior distribution here.

In a general conditional generation task, in which a conditional real-world distribution *p*(***y***|***x***) is modelled, CVAEs start from a general maximum likelihood formulation. Generally, the task is to maximize the likelihood of generating realistic samples of ***y*** given a conditioning **x** $max log p \left(\left.y\right|x\right) .$

In practice, **x** and y can be any quantities governed by a real-world joint distribution *p*(**x**, **y**). In Fig. 2a, a driving context 22, e.g., a driving context of a semi-autonomous or autonomous vehicle 100, is shown as a first type of data **x**. The driving context 22 may comprise, e.g., observations of an environment of the vehicle 100. In Fig. 2a, ground-truth trajectories 21, e.g., ground-truth trajectories of semi-autonomous or autonomous vehicle 100, are shown as a second type of data **y**. Control signals for controlling and/or operating, e.g., steering, the vehicle 100 along the trajectories of the vehicle 100 in the environment may also be comprised in the second type of data.

In achieving maximizing the likelihood, one may aim to learn a conditional distribution, *p_{θ}*(**y**|**x**), which may also be called a generator, parameterized by *θ*: $θ ← arg {max}_{θ} {E}_{\left(x, y\right) ∼ p \left(x, y\right)} \left[{logp}_{θ}\left(y\left|x\right.\right)\right] .$

Many real-world distributions are governed by latent variables - they describe the inherent structure of the data unobservable from the data itself. For example, in a vehicle motion prediction intersection scenario, a latent variable would loosely correspond to different actions agents undertake at this intersection. Mathematically, latent variables factorize the learned conditional distribution $log {p}_{θ} \left(y\left|x\right.\right) = log \int {p}_{θ} \left(y\left|x, z\right.\right) p \left(z\left|x\right.\right) d z$

A question which may arise is: How to train the generator *p_{θ}*(**y**|**x**), given that the goal is to maximize its log likelihood? Integrating out the latent variables in the above equation is intractable; hence in practice we bound it by the Evidence Lower Bound (ELBO). In deriving the ELBO, one may start with $\begin{matrix}log {p}_{θ} \left(y\left|x\right.\right) & = log \int {p}_{θ} \left(y\left|x, z\right.\right) p \left(z\left|x\right.\right) d z \\ & = log \int {p}_{θ} \left(y\left|x, z\right.\right) p \left(z\left|x\right.\right) \frac{q \left(z\left|x, y\right.\right)}{q \left(z\left|x, y\right.\right)} d z\end{matrix}$

Here, a posterior joint distribution of **x** and **y** in *q*(**z**l**x**, **y**) is employed. The intuition behind *q* is that it recovers the correct latent variable **z** given the context **x** and the predictive variable **y**.

Further, we rewrite the above $\begin{matrix}log {p}_{θ} \left(y\left|x\right.\right) & = log \int {p}_{θ} \left(y\left|x, z\right.\right) p \left(z\left|x\right.\right) \frac{q \left(z\left|x, y\right.\right)}{q \left(z\left|x, y\right.\right)} d z \\ & = log {E}_{q \left(z\left|x, y\right.\right)} \left[\frac{p \left(y\left|x, z\right.\right) p \left(z\left|x\right.\right)}{q \left(z\left|x, y\right.\right)}\right]\end{matrix}$

One may apply Jensen's inequality, which states that $log E \geq E log$, and find $\begin{matrix}log {p}_{θ} \left(y\left|x\right.\right) \geq {E}_{q \left(z\left|x, y\right.\right)} \left[log \frac{{p}_{θ} \left(y\left|x, z\right.\right) p \left(z\left|x\right.\right)}{q \left(z\left|x, y\right.\right)}\right] = \\ = {E}_{q \left(z\left|x, y\right.\right)} \left[log {p}_{θ}\left(y\left|x, z\right.\right)\right] - {E}_{q \left(z\left|x, y\right.\right)} \left[\frac{q \left(z\left|x, y\right.\right)}{p \left(z\left|x\right.\right)}\right] ,\end{matrix}$

One may finally arrive at the ELBO, denoted by 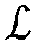 ${logp}_{θ} \left(y\left|x\right.\right) \geq L = {E}_{{q}_{ϕ} \left(z\left|x, y\right.\right)} \left[log {p}_{θ}\left(y\left|x, z\right.\right)\right] - {D}_{KL} \left({q}_{ϕ}\left(z\left|x, y\right.\right)\left‖{p}_{γ}\left(z\left|x\right.\right)\right.\right)$

The intuition behind 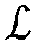 is that maximizing this quantity maximizes the original objective. In practice, the distributions *q_{ϕ}* and *p_{γ}* may also be learned and may be assumed to be Gaussian. Minimizing their Kullbkack-Leibler divergence, which is the second term in the inequality, may ensure that the prior and posteriors are close together. The *q_{ϕ}* may be called the posterior, since it includes the observed predictive variable ***y***, whereas the *p_{γ}* may be called the prior, since we have no knowledge of ***y***, only context ***x***. Thus, we may use *q_{ϕ}* in training, in which context **y** is available, and *p_{γ}* in inference. In contrast, the first term may generally ensure a high-quality reconstruction: given our posterior embedding *q_{ϕ}*, one may want to generate high quality outputs.

Fig. 2a shows an architecture of a CVAE model 200 in a motion prediction case, where the context variable **x** may represent a generic driving context 21, and the predictive variable **y** on the right in Fig. 2a may denoted future trajectories. In the CVAE architecture of Fig. 2a, the encoder network 23, also denoted by *ϕ,* may learn the relationship of the input variables **x** and **y** by modeling the latent space posterior distribution 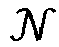 (**µ***_{ϕ}*,**Σ***_{ϕ}*). A prior network 24, also denoted by *y,*may learn the prior distribution of **x**. A generator network 25, also called a decoder, and also denoted by *θ*, may generate samples of **y** given the context **x** and latent space samples **z**, either from the posterior ( 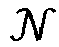 (**µ***_{ϕ}*,**Σ***_{ϕ}*), so **z***_{ϕ}*) or the prior distributions ( 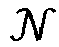 (**µ***_{γ}*,**Σ***_{γ}*), so **z***_{γ}*), depending on a training regime 26 or an inference regime 27 being used.

**Fig. 2b** shows an architecture of an example of an inverted CVAE model 210. This architecture may shown a different perspective to the CVAE model 200 of Fig. 2a. A CVAE 200 may learn a generic conditional distribution *p_{θ}*(**y**|**x**) by approximating, e.g.. a Gaussian posterior latent space between *p_{ϕ}*(**z**|**x,y**) under a learned prior *p_{γ}*(**z**|**x**) assumption. Therefore, one may introduce an inverted CVAE architecture 210, which is mathematically equivalent to the derivation outlined above. In the inverted case, one may learn a generator *p_{ψ}*(**x**|**y**) under the same posterior latent space *p*(**z**|**x**,**y**) but under a different prior, denoted by *p_{ξ}*(**z**|**y**). In motion prediction applications, this entails an inverse problem of predicting future trajectories given a driving context. Instead, a context in the form of **x** on the right in Fig. 2b may be reconstructed, which fits to a certain future trajectory. In reality, context **x** and future trajectories ***y*** are governed by a joint distribution; they are not independent random variables. Therefore, learning this task may also be theoretically reasonable. Thus in an automated driving context, for example, the CVAE model 210 may be used to reconstruct past context data that fits to a certain ground-truth future.

Fig. 2b shows an architecture of an inverted CVAE model 210 in the motion prediction case. Here, the context variable y may be a future trajectory, and the predictive variable x may be the driving context that matches this trajectory. The encoder network 23, *ϕ*, may learn the relationship of **x** and **y** by modeling the latent space posterior distribution 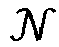 (**µ***_{ϕ}*,**Σ***_{ϕ}*). The prior network 24, here denoted by *ξ*, may learn the prior distribution of **y**. The generator network, also called a decoder, and also denoted by *ψ*, may generate samples of **x** given the context **y** and latent space samples z**,** either from the posterior ( 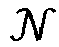 (**µ***_{ϕ}*,**Σ***_{ϕ}*), so **z***_{ϕ}*) or the prior distributions ( 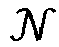 (**µ***_{ξ}*,**Σ***_{ξ}*), so **z***_{ξ}*), depending on a training regime 26 or an inference regime 27 being used.

A question which may arise in arriving at the subject matter of an embodiment may be, whether it is possible to combine the two CVAE variants that approximate two different but related distributions, i.e. to simultaneously learn *p*(**x**|**y**) and *p*(**y**|**x**). In general, the two distributions are governed by a joint relationship *p*(**x**, **y**) = *p*(**x**|*y*)*p*(**y**) = *p*(**y**|**x**)*p*(**x**), however, since it may be a task to learn *p*(**x**|**y**) and *p*(**y**|**x**), one may not have to directly learn *p*(**x**, **y**), nor *p*(**x**) or *p*(**y**). One may define a joint objective of maximizing the log probability of simultaneously drawing realistic **x**' and **y**' samples given a real-world **x**, **y** pair: $max \left[log p\left(\left.y′\right|x\right)+log p\left(\left.x′\right|y\right)\right] = max log p \left(\left.y′\right|x\right) p \left(\left.x′\right|y\right) .$

In this context, one may be interested in generating counterfactuals to the obtained **x**, **y** pairing. In achieving this, one may aim to learn two generators *p_{θ}*(**y'**|**x**) and *p_{ψ}*(**x'|y**) parameterized by *θ* and *ψ*: $θ , ψ ← arg {max}_{θ , ψ} {E}_{\left(x, y\right) ∼ p \left(x, y\right)} \left[log {p}_{θ}\left(\left.y′\right|x\right)+log {p}_{ψ}\left(\left.x′\right|y\right)\right] .$

One may independently derive the ELBO criterion in both cases: $log {p}_{θ} \left(\left.y′\right|x\right) \geq {L}_{ 1} = {E}_{{q}_{ϕ} \left(\left.z\right|x,y\right)} \left[log {p}_{θ}\left(\left.y′\right|x,z\right)\right] - {D}_{KL} \left(\left.{q}_{ϕ}\left(\left.z\right|x,y\right)\right‖{p}_{γ}\left(\left.z\right|x\right)\right)$ $log {p}_{ψ} \left(\left.x′\right|y\right) \geq {L}_{ 2} = {E}_{{q}_{ϕ} \left(\left.z\right|x,y\right)} \left[log {p}_{ψ}\left(\left.x′\right|y,z\right)\right] - {D}_{KL} \left(\left.{q}_{ϕ}\left(\left.z\right|x,y\right)\right‖{p}_{ξ}\left(\left.z\right|y\right)\right)$

Summing the two, we arrive at the original maximization problem max [log *p*(**y**'|**x**) + log *p*(**x'**|**y**)] = max log *p*(**y'**|**x**)*p*(**x'**|**y**): $\begin{matrix}log {p}_{θ} \left(\left.y′\right|x\right) + log {p}_{ψ} \left(\left.x′\right|y\right) \geq {L}_{ 1} + {L}_{ 2} = \\ = {E}_{{q}_{ϕ} \left(\left.z\right|x,y\right)} \left[log {p}_{θ}\left(\left.y′\right|x,z\right)+log {p}_{ψ}\left(\left.x′\right|y,z\right)\right] - \\ - {D}_{KL} \left(\left.{q}_{ϕ}\left(\left.z\right|x,y\right)\right‖{p}_{γ}\left(\left.z\right|x\right)\right) - {D}_{KL} \left(\left.{q}_{ϕ}\left(\left.z\right|x,y\right)\right‖{p}_{ξ}\left(\left.z\right|y\right)\right)\end{matrix}$

Thus, simply maximizing the sum of the two individual ELBO objectives may maximize the objective of jointly generating the two samples. In training, both the generators may draw from the same posterior latent space *q_{ϕ}*(**z**|**x**, **y**), which then forms the joint, shared latent space. Thus, a single latent space sample z now may have to be sufficiently representative to decode two different quantities.

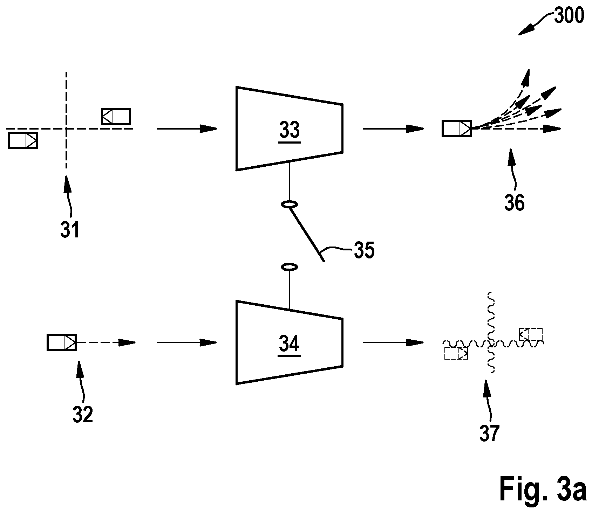

**Fig. 3a** shows a high-level illustration of an example of a CVAE model 300 involving a double CVAE model 33, 34 according to an embodiment. As two CVAE models 33, 34 now may be simultaneously trained, this may greatly increase the training signal to the used latent space. Here, the high-level illustration shows a double decoder CVAE model 300 wherein two individual CVAE models 33, 34 may be trained simultaneously, and may be connected by a switch 35. The two different CVAE models 33, 34 may also be trained individually and/or separately, if the switch 35 may be open. In this case, the two CVAE models 33, 34 may be trained for individual tasks. The individual tasks may comprise application task such as future motion prediction, which may yield predicted future trajectories 36 on the basis of past driving contexts 31; and past context reconstruction, which may yield semi-predicted past driving contexts 37 on the basis of future ground-truth trajectories 32. If the switch 35 may be closed, the two CVAE models 33, 34 may be trained jointly.

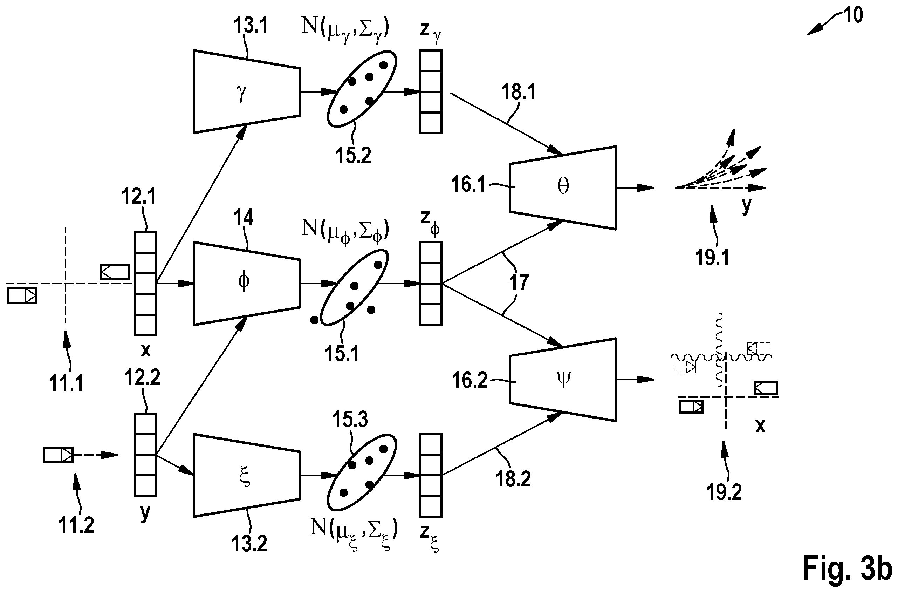

**Fig. 3b** shows a detailed architecture of a CVAE model 10 involving a double decoder 16.1, 16.2 according to an embodiment. The CVAE model 10 may be trained for performing a first 121 and a second application task 122. The first application task 121 may comprise the generation of future trajectories 19.1 and/or samples thereof, also denoted by y on the right in the figure. The second application task 122 may comprise the generation of driving contexts 19.2 and/or samples thereof, also denoted by **x** on the right in the figure. CVAE model 10 may comprise an encoder 14, also denoted by *ϕ* and which may also be called an encoder network and/or a generator, which may learn the relationship of the input variables x and y by modelling and/or generating the latent space posterior distribution 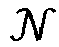 (**µ***_{ϕ}*,**Σ***_{ϕ}*) for the latent space 15.1. CVAE model 10 may be trained on the first application task 121 as follows. A dataset 12.1, 12.2 may be accessed. Dataset 12.1, 12.2 may comprise a first type of data 12.1 which may represent a first input variable. Here, the first type of data 12.1 may comprise driving contexts 11.1, also denoted by x. Driving contexts 11,1 may comprise observations, such as sensor-based observations, of an environment of a semi-autonomous or autonomous vehicle 100. The sensor-based observations may be on the basis of sensor data, such as one or more of: image data, such as digital image data, video data, radar, LiDAR, ultrasonic data, ultrasonic data, motion data, or thermal images; audio data, such as a sound signal; text data; trajectories on manifolds; and meta-type data such as tensors, e.g., image tensors. Dataset 12.1, 12.2 may further comprise a second type of data 12.2, which may represent a second input variable. Here, the second type of data 12.2 may comprise ground-truth trajectories 11.2, also denoted by y. The ground-truth trajectories 11.2 may further comprise or be associated with control signals for controlling and/or operating the semi-autonomous or autonomous vehicle 100. The control signals may also be based on and/or associated with sensor data as discussed above. The first input variable and the second input variable may be governed by a joint distribution. Using a prior network 13.1, which may be denoted by γ*,a* conditional prior distribution 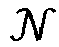 (**µ***_{γ}*,**Σ***_{γ}*) of a latent space variable conditioned on the first input variable **x** may be generated. The conditional distribution may be generated in a further latent space 15.2. The prior network 13.1 may be initialized to encode ***x*** into ***z*** by learning *p*(**z**|***x***). Using the encoder 14, a conditional latent space posterior distribution of the latent space variable, conditioned on the first input variable and the second input variable, *p*(***z***|***x***,***y***), e.g., a normal distribution 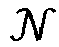 (**µ***_{ϕ}*,**Σ***_{ϕ}*), may be parameterized by the encoder and so may be generated. The encoder 14 of (***x***,***y***) may be initialized to do so by mapping the input data to the, lower-dimensional, latent space of ***z***. Usually this is done by assuming the distribution is a Gaussian distribution, and by learning its mean and variance via one or more neural networks. From the conditional latent space posterior distribution, latent space variable samples **z***_{ϕ}* may be obtained. Using a decoder 16.1, also denoted by *θ*, based on the obtained latent space variable samples **z***_{ϕ}*, a conditional distribution of the second input variable **y** conditioned on the latent space variable **z** may be obtained, and second input variable samples from the conditional distribution may be generated, as indicated by **y** on the right. The decoder 16.1 may be initialized to do so, by mapping ***y*** from ***z***, e.g. as a function, and optionally additionally ***x***, by learning the distribution *p*(***y***|***z***) (optionally *p*(***y***|***z***,***x***)). These resulting samples, and/or function outputs when the decoder 16.1 may act as a function or mapping, are then samples of trajectories given the context **x**, in this case. The encoder 14 and decoder 16.1 are correspondingly trained according to an embodiment. The conditional prior distribution, and/or the network, such as the prior network 13.1, generating the conditional prior distribution, may be trained as well in an analogous manner. CVAE model 10 may further comprise a further decoder 16.2, also denoted by *ψ*. CVAE model 10 may be trained on the second application task 122 as follows. Using a further prior network 13.2, which may be denoted by *ξ*,a further conditional prior distribution 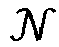 (**µ***_{ξ}*,**Σ***_{ξ}*) of a latent space variable conditioned on the first input variable **x** may be generated. The further conditional distribution may be generated in a further latent space 15.3. The further prior network 13.2 may be initialized to encode ***y*** into ***z*** by learning *p*(***z***|***y***), formulated in the same manner as above. Using the further decoder 16.2, based on the obtained latent space variable samples **z***_{ϕ},* a further conditional distribution of the second input variable **x** conditioned on the latent space variable **z** may be obtained, and first input variable samples from the conditional distribution may be generated, as indicated by **x** on the right. The further decoder 16.2 may be initialized to do so, by mapping ***x*** from ***z***, e.g. as a function, and optionally additionally ***y***, by learning the distribution *p*(***x***|***z***) (optionally *p*(***x***|***z***, ***y***)). These resulting samples, and/or function outputs when the further decoder 16.2 may act as a function or mapping, are then samples of driving contexts given the ground-truth trajectories ***y***. The encoder 14 and further decoder 16.2 are correspondingly further trained according to an embodiment. The further conditional prior distribution, and/or the network, such as the prior network 13.2, generating the further conditional prior distribution, may be trained as well in an analogous manner. The decoder 16.1, which may also be a generator network, may generate samples of **y** given the context **x** and latent space samples z, either from the posterior ( 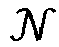 (**µ***_{ϕ}*,**Σ***_{ϕ}*), so **z***_{ϕ}*) or the prior distributions ( 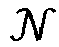 (**µ***_{γ}*,**Σ***_{γ}*), so **z***_{γ}*), depending on a training regime 17 or an inference regime 18.1 being used. The further decoder 16.2, which may also be a generator network, may generate samples of x given the context y and latent space samples z, either from the posterior ( 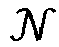 (**µ***_{ϕ}*,**Σ***_{ϕ}*), so **z***_{ϕ}*) or the prior distributions ( 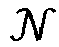 (**µ***_{ξ}*,**Σ***_{ξ}*), so **z***_{ξ}*), depending on the training regime 17 or an inference regime 18.2 being used.

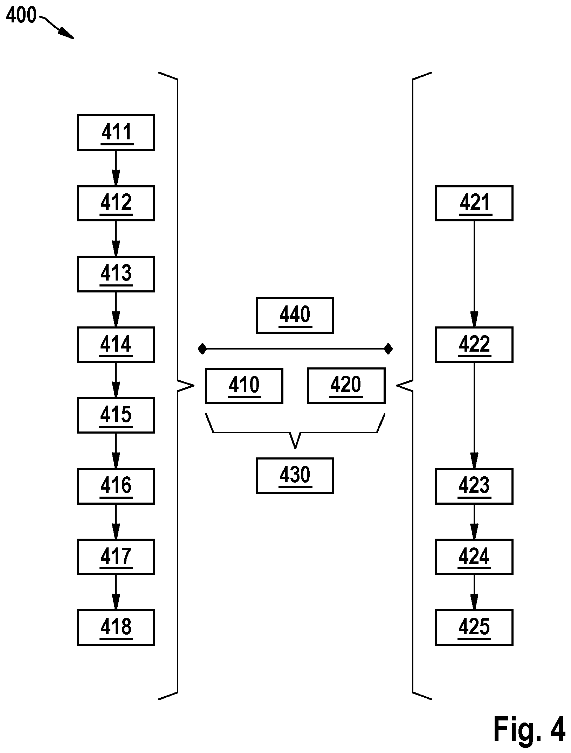

**Fig. 4** shows a method 400 of training a CVAE model 10 for performing a first 121 and a second application task 122 according to an embodiment. Method 400 may be a computer-implemented method 400. Method 400 may comprise a step 410 of training the CVAE model 10 on the first application task 121.

The training step 410 of training the CVAE model 10 on the first application task 121 may comprise a step 411 of accessing a dataset 12.1, 12.2, which dataset 12.1, 12.2 may comprise a first type of data 12.1 representing a first input variable and a second type of data 12.2 representing a second input variable, wherein the first input variable and the second input variable are governed by a joint distribution. The training step 410 of training the CVAE model 10 on the first application task 121 may further comprise a step 412 of generating a conditional prior distribution of a latent space variable conditioned on the first input variable. The training step 410 of training the CVAE model 10 on the first application task 121 may further comprise a step 413 of generating a conditional latent space posterior distribution of the latent space variable conditioned on the first input variable and the second input variable, using an encoder 14 of the CVAE model 10. The training step 410 of training the CVAE model 10 on the first application task 121 may further comprise a step 414 of obtaining a statistical distance between the conditional prior distribution and the conditional latent space posterior distribution, using a statistical measure. The training step 410 of training the CVAE model 10 on the first application task 121 may further comprise a step 415 of obtaining a latent space variable sample from the conditional latent space posterior distribution. The training step 410 of training the CVAE model 10 on the first application task 121 may further comprise a step 416 of generating, using a decoder 16.1 of the CVAE model 10, based on the obtained latent space variable sample, a conditional distribution of the second input variable conditioned on the latent space variable. The training step 410 of training the CVAE model 10 on the first application task 121 may further comprise a step 417 of obtaining second input variable samples from the conditional distribution. The training step 410 of training the CVAE model 10 on the first application task 121 may further comprise a step 418 of, based on the obtained second input variable samples and the statistical distance, minimizing a loss function to obtain a trained encoder 14 and a trained decoder 16.1 of the latent space variable conditioned on the second input variable.

Method 400 may further comprise a step 420 of training the CVAE model 10 on the second application task 122. The training step 420 of training the CVAE model 10 on the second application task 122 may comprise a step 421 of generating a further conditional prior distribution of the latent space variable conditioned on the second input variable. The training step 420 of training the CVAE model 10 on the second application task 122 may further comprise a step 422 of, using the statistical measure, obtaining a further statistical distance between the further conditional prior distribution and the conditional latent space posterior distribution. The training step 420 of training the CVAE model 10 on the second application task 122 may further comprise a step 423 of, using a further decoder 16.2 of the CVAE model 10, based on an obtained latent space variable sample, generating a further conditional distribution of the first input variable conditioned on the latent space variable. The training step 420 of training the CVAE model 10 on the second application task 122 may further comprise a step 424 of obtaining first input variable samples from the further conditional distribution. The training step 420 of training the CVAE model 10 on the second application task 122 may further comprise a step 425 of, based on of the loss function, the obtained first input variable samples and the further statistical distance, minimizing a further loss function to obtain a further trained encoder 14 and a trained further decoder 16.2, wherein the further trained encoder 14 and the trained further decoder 16.2 are trained on the second application task 122.

Method 400 may further comprise a step 430 of outputting the CVAE model 10 comprising the further trained encoder 14, the trained decoder 16.1 and the trained further decoder 16.2 as the trained CVAE model 10.

Method 400 may further comprise a step 440 of updating one or more model parameters of the CVAE model 10 during the training of the CVAE model 10. The encoder 14, the decoder 16.1 and/or the further decoder 16.2 of the CVAE model 10 may be parameterized by the one or more model parameters of the CVAE model 10. Furthermore, one or more of the one or more generators and/or the one or more prior networks 13.1, 13.2 of the CVAE model 10 may be parameterized by one or more of the one or more model parameters of the CVAE model 10.

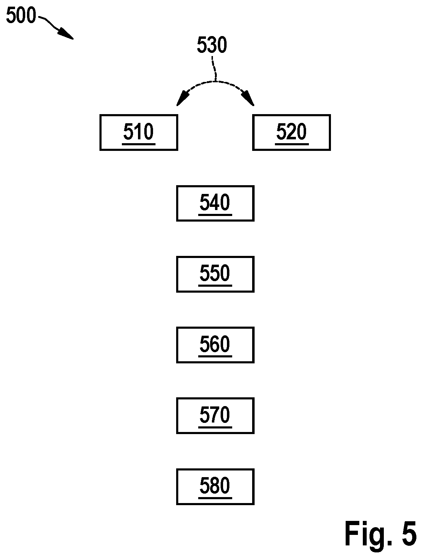

**Fig. 5** shows a method 500 of using a CVAE model 10 for performing a first 121 and a second application task 122 of a computer-controlled system 110 according to an embodiment. Method 500 may be a computer-implemented method 500. CVAE model 10 may have been trained according to an embodiment.

Method 500 may comprise a step 510 of, using a decoder 16.1 of CVAE model 10, performing the first application task 121 of the computer-controlled system 110. Method 500 may further comprise a step 520 of, using a further decoder 16.2 of CVAE model 10, performing 520 the second application task 122 of the computer-controlled system 110. Method 500 may further comprise a step 530 of switching, e.g., using a switch 35, between performing step 510 and performing step 520. The step 530 may comprise switching between two modes of computer-controlled 110, e.g., two operation modes, wherein the two modes may correspond with respectively performing step 510 and performing 520, e.g., respectively performing the first application task 121 and performing the second application task 122.

Method 500 may further comprise a step 540 of, using a prior network 13.1, 13.2, generating a conditional prior distribution of a latent space variable conditioned on the first input variable and using the decoder 16.1 based on the conditional prior distribution. Method 500 may further comprise a step 550 of, using a prior network 13.1, 13.2, generating a further conditional prior distribution of the latent space variable conditioned on the second input variable and using the further decoder 16.2 based on the further conditional prior distribution. Method 500 may further comprise a step 560 of generating a conditional distribution of the first input variable, conditioned on the second input variable, and/or a conditional distribution of the second input variable, conditioned on the first input variable. Method 500 may further comprise a step 570 of generating counterfactual data for the CVAE model 10, such as a counterfactual for the second input variable given a reference for the first input variable; a counterfactual for the second input variable given a reference for a pair of the first and the second input variable; a counterfactual for the first input variable; and/or a counterfactual for the first input variable given a reference for the second input variable. Method 500 may further comprise a step 580 of generating training data, e.g., for a further training of the CVAE model 10.

In an embodiment, performing the different application tasks 121, 122 may be carried out in corresponding different operation modes of the computer-controlled system 110. Performing the first application task 121 may correspond to a certain first level of operation, e.g., a regular mode of operation or execution mode. The certain first level of operation may be a level of operation of computer-controlled system 110, and/or of a system of which computer-controlled system 110 forms a part. The CVAE model 10 may have been trained on performing the first application task 121 and the second application task 122. The CVAE model 10 may have been simultaneously trained on performing the first application task 121 and performing the second application task 122. Performing the second application task 122 may correspond to a certain second level of operation, e.g., an alternative mode of operation or execution mode. The certain second level of operation may be a level of operation of computer-controlled system 110, and/or of a system of which computer-controlled system 110 forms a part.

One of the first 121 and second application tasks 122, for example the first application task 121, may comprise a data generation task. One of the first 121 and second application tasks 122, for example the second application task 121, may comprise anomaly detection. A decoder 16.1 of the CVAE model 10 may be configured to reconstruct one or more of the first 12.1 and the second type of data 12.2. A further decoder 16.2 of the CVAE model 10 may be configured to, based on an output of the decoder 16.1, switch to a different execution mode of the computer-controlled system 110.

In a method 400, 500 according to an embodiment, the first and/or second types of data 12.1 12.2 may comprise input data, such as sensor data, which may comprise data obtained from a sensor. The sensor data may comprise image data, such as digital image data, video data, radar, LiDAR, ultrasonic data, ultrasonic data, motion data, or thermal images; audio data, such as a sound signal; text data; trajectories on manifolds; and meta-type data such as tensors, e.g., image tensors. The first and/or application tasks 121, 122 may comprise an analysis of the sensor data. The sensor may determine measurements of the environment in the form of sensor signals, which may be given by the sensor data. The input data, which may comprise multi-modal input data, may be modelled in and/or through one or more joint latent spaces according to an embodiment.

For example, one of the first and second application tasks 121, 122 may comprise an object detection or a line detection in an environment, such as the driving context 11.1 of a vehicle 100. Another the first and second application tasks 121, 122 may comprise a motion prediction based on the object detection or the line detection in the environment, such as a trajectory 19.1 generation for the vehicle 100 based on the driving context 11.1 of the vehicle 100.

For example, one of the first and second application tasks 121, 122 may comprise an analysis of the sensor data, such as a classification task of the sensor data, The classification may comprise one or more of image classification, video classification and audio classification, for example in a video and/or audio analysis, or performing a semantic segmentation on the sensor data. Such a classification of the sensor data, detection of the presence of objects in the sensor data and/or performing of a semantic segmentation on the sensor data may, e.g., be regarding objects in an environment of te computer-controlled system 110, for example, traffic signs, road surfaces, pedestrians and/or vehicles in an environment of a semi-autonomous or autonomous vehicle as the computer-controlled system 110 or comprising the computer-controlled system 110. Such application task may be carried out based on low-level features, e.g., edges or pixel attributes for images. Another of the first 121 and the second application tasks 122 may comprise a regression task, such as determining a continuous value or multiple continuous values, e.g., a regression analysis regarding a distance, a velocity, and/or an acceleration of an object 116, such as a pedestrian or another traffic participant, in the sensor data. This may be carried out based on low-level features, e.g., edges or pixel attributes for images. This way, in combining the first and second application tasks 121, 122 in such a manner of joint classification and regression, methods 400, 500 according to an embodiment may be used in such multi-task setups of joint classification and regression: for example, a decoder 16.1 of the CVAE model 10 may perform a classification, and a further decoder 16.2 of the CVAE model 10 may perform a regression. During these procedure, the latent space 15.1 may model a joint relationship between the two different application tasks 121, 122.

For example, the first application task 121 may comprise an anomaly detection in one or more of the first type of data 12.1 and the second type of data 12.2 in the sensor data. The second application task 122 may comprise a data-generation task based on the anomaly detection, such as a data reconstruction of one or more of the first type of data 12.1 and the second type of data 12.2 in the sensor data. This way, in combining the first and second application tasks 121, 122 in such a manner, methods 400, 500 according to an embodiment may be used in a multi-task setup of anomaly detection in a technical system. Autoencoders are generally used for anomaly detection via studying the qualities of their reconstruction. If a double-decoder CVAE according to an embodiment may be trained, it is possible to feed it only a single variable (***x*** or ***y***) and reconstruct its counterpart. Then, judging by the quality of the reconstruction, it would be possible to ascertain whether an anomaly originates from ***x*** or from ***y***, i.e. whether the model is able to successfully reconstruct ***x*** but not ***y***, or vice versa. This may enable a more refined anomaly detection than in standard VAE systems. For example, if a double-decoder CVAE may be jointly trained on images and textual descriptions, and then fed an (***x***,*y*) image/text pair where the textual description of the image does not match its contents, the reconstruction of the (***x,y***) pair will potentially not match the original pair. It may happen that the image matches the original image indicated by a commonly used image-matching metric, such as a Fréchet Inception Distance, while the text does not, using a corresponding text- and/or sentence-level metric. This may indicate that the provided text, may be detected as anomalous.

For example, the first application task 121 may comprise a generation, computation and/or reconstruction of additional control signals of a same data type as the sensor data for controlling and/or operating a computer-controlled system 110 according to an embodiment. The second application task 122 may comprise controlling and/or operating the computer-controlled system 110 based on the generation and/or the reconstruction, such as switching 35, 530 from a first operation mode to a second operation mode. Controlling the technical system, wherein the technical system comprises the computer-controlled system 110, may be performed by reinforcement learning. Reinforcement learning may entail learning a policy for controlling the physical system and then operating the physical system accordingly, and/or performing a fail-safe operation, for example, by detecting anomalies, and then operating the technical system in a safe mode. In general, CVAE systems may be used for autonomous systems to generate predictions that affect a policy or policies themselves. A double-decoder CVAE system according to an embodiment may be equipped with additional reconstruction capabilities, such as the generation of additional signals to the controlling and/or planning output, which may enhance its interpretability. As with anomaly detection section, the outputs of a decoder 16.1 of the CVAE model 10 may be used to guide the outputs of a further decoder 16.2 of the CVAE model 10. For example, there may be two decoders: one for reconstruction, and one for controlling. If the CVAE model 10 may not able to reconstruct certain inputs to a degree of quality, the controlling decoder may switch to a fail-safe or safety-critical mode.

A machine learning system may comprise the CVAE model 10, which may be trained according to an embodiment. The CVAE model 10 may then be put to a downstream use during an inference stage, which may comprise a method of using the CVAE model 10 according to an embodiment. Herein, the CVAE model 10 may be a generative model 10 to generate training and/or test data, e.g., for further training of the CVAE model 10 or and/or another model. In general, CVAE systems may be used in learning policies for autonomous systems. Since CVAE model 10 are generative models, they may be used to generate training or testing data for an machine learning system. A CVAE model 10 according to an embodiment may be additionally enabled to a refined and flexible generation setup, where the relationship of multiple data types may be jointly learned with the goal of enabling conditional multi-modal generation in any direction with any subset of the data.

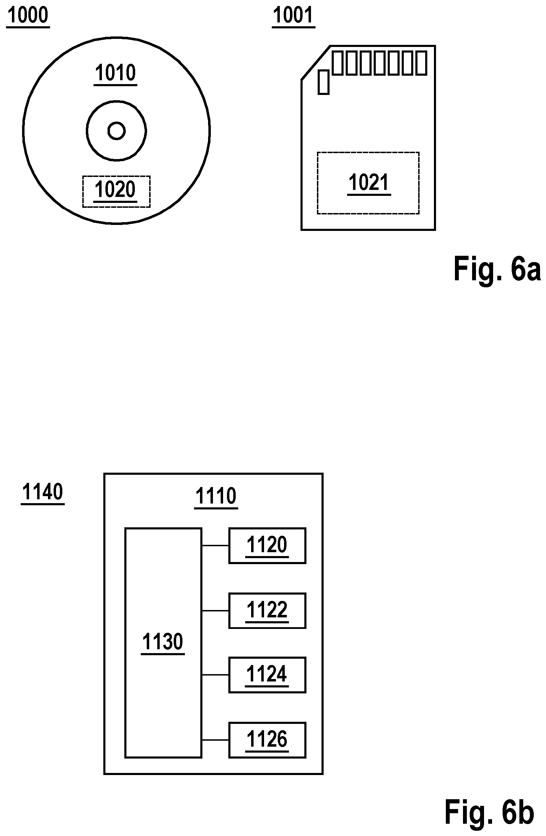

Any of the methods 400, 500 as described in this specification may be implemented on a computer as a computer implemented method 400, 500, as dedicated hardware, or as a combination of both. As also illustrated in **Fig. 6a****,** instructions for the computer, e.g., executable code, may be stored on a computer-readable medium 1000, 1001, e.g., in the form of a series 1020, 1021 of machine-readable physical marks and/or as a series of elements having different electrical, e.g., magnetic, or optical properties or values. The computer-readable medium 1000, 1001 may be a transitory or non-transitory medium. Examples of computer-readable mediums include memory devices, optical storage devices, integrated circuits, etc. By way of example, Fig. 6a shows an optical storage device 1000 and a memory card 1001.

**Fig. 6b** shows a processor system 1140 which may comprise or represent a system, e.g., a computer-controlled system 110 according to an embodiment. The system may be configured to perform a method 400, 500 as described elsewhere in this specification. The processor system may comprise one or more subsystems or components 1110. For example, a processing subsystem 1120 may be provided for executing computer program components to perform a method as described elsewhere in this specification. A memory 1122 may be provided for storing programming code, data, etc. A communication subsystem 1126, such as a network interface, may allow communication with other entities. In some examples, a dedicated integrated circuit 1124 may be provided for performing part or all of the processing related to a method as described elsewhere in this specification. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. Further, where the system 1140 may be implemented in a cloud computing system, a cloud server and/or a compute farm, the various hardware components may belong to separate physical systems. For example, the processing subsystem 1120 may include a first processor in a first server and a second processor in a second server.

In an alternative embodiment of Fig. 6b, the processor system 1140 may represent a computer-controlled system 110, on which the CVAE model 10 may be deployed. In other words, the processor system 1140 may represent a deployment target, which may perform an application task 121, 122 as described elsewhere in this specification. The processor system 1140 may for example be a robotic system 110, and/or an automated or semi-automated vehicle 100 according to an embodiment, and/or otherwise as described in this application. The computer-controlled system 100, 110 may comprise, for example, a sensor 115, such as an image sensor 115, such as a video camera 115, which may determine measurements of the environment in the form of sensor signals, which may be given by, for example, digital images, e.g., video, radar, LiDAR, ultrasonic, motion thermal images, or audio signals; for, e.g., detecting the presence of objects in the environment of the vehicle 100. An application task 121, 122 may comprise classifying the data from the sensor 115, detecting the presence of objects in the sensor data and/or performing a semantic segmentation on the data, e.g., regarding traffic signs, road surfaces, pedestrians and vehicles. Another application task may comprise determining a continuous value or multiple continuous values, e.g., perform a regression analysis, e.g., regarding a distance, a velocity, an acceleration, and/or the tracking of an item, e.g., an object, in the data. These examples of application tasks 121, 122 may be carried out on low-level features, such as edges or pixel attributes in the case of image data.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (400) of training a conditional variational autoencoder, CVAE, model (10) for performing a first (121) and a second application task (122), wherein the CVAE model (10) comprises an encoder-decoder pair (14, 16.1) and a latent space (15.1), the encoder-decoder pair (14, 16.1) comprising an encoder (14) and a decoder (16.1),
wherein the method comprises training (410) the CVAE model (10) on the first application task (121) by
- accessing (411) a dataset (12.1, 12.2) comprising a first type of data (12.1) representing a first input variable and a second type of data (12.2) representing a second input variable, wherein the first input variable and the second input variable are governed by a joint distribution;
- generating (412) a conditional prior distribution of a latent space variable conditioned on the first input variable;
- using the encoder (14), generating (413) a conditional latent space posterior distribution of the latent space variable conditioned on the first input variable and the second input variable;
- using a statistical measure, obtaining (414) a statistical distance between the conditional prior distribution and the conditional latent space posterior distribution;
- obtaining (415) a latent space variable sample from the conditional latent space posterior distribution;
- using the decoder (16.1), based on the obtained latent space variable sample, generating (416) a conditional distribution of the second input variable conditioned on the latent space variable;
- obtaining (417) second input variable samples from the conditional distribution,
- based on the obtained second input variable samples and the statistical distance, minimizing (418) a loss function to obtain a trained encoder (14) and a trained decoder (16.1),
wherein the CVAE model (10) further comprises a further decoder (16.2), wherein the method (400) further comprises training (420) the CVAE model (10) on the second application task (122) by:
- generating (421) a further conditional prior distribution of the latent space variable conditioned on the second input variable;
- using the statistical measure, obtaining (422) a further statistical distance between the further conditional prior distribution and the conditional latent space posterior distribution;
- using the further decoder (16.2), based on an obtained latent space variable sample, generating (423) a further conditional distribution of the first input variable conditioned on the latent space variable,
- obtaining (424) first input variable samples from the further conditional distribution,
- based on of the loss function, the obtained first input variable samples and the further statistical distance, minimizing (425) a further loss function to obtain a further trained encoder (14) and a trained further decoder (16.2), wherein the further trained encoder (14) and the trained further decoder (16.2) are trained on the second application task (122),
wherein the method (400) further comprises
- outputting (430) the CVAE model (10) comprising the further trained encoder (14), the trained decoder (16.1) and the trained further decoder (16.2) as the trained CVAE model (10).

2. A method (400) as in claim 1, comprising training the CVAE model (10) to control a computer-controlled system (110) to perform the first (121) and second application tasks (122), wherein the dataset (12.1, 12.2) comprises, as the first type of data (12.1), observations of an environment of the computer-controlled system (110), and as the second type of data (12.2), control signals of the computer-controlled system (110).

3. A method (400) as in claim 2, wherein the computer-controlled system (110) comprises one or more of a robotic system, a vehicle (100), such as a semi-autonomous or autonomous vehicle (100), a domestic appliance, a power tool, a manufacturing machine, a personal assistant and an access-control system, and the control signals are for controlling and/or operating the computer-controlled system (110).

4. A method (400) as in claim 2 or 3, wherein the computer-controlled system (110) comprises a semi-autonomous or autonomous vehicle (100), one or both of the first and the second application task (122) comprise motion prediction of the vehicle (100), the first type of data (12.1) represents sensor-based observations of an environment (11.1) of the vehicle (100), and the second type of data (12.2) represents control signals for controlling and/or steering the vehicle (100) along trajectories (11.2) of the vehicle (100) in the environment.

5. A method (400) as in any of the preceding claims, wherein
- the statistical distance and/or the further statistical distance comprise a Kullback-Leibler divergence;
- the loss function and/or the further loss function comprise an Evidence Lower Bound (ELBO);
- the loss function comprises an expectation of a distance, such as a mean squared error, between the second input variable and a reference value, based on the second input variable samples; and/or
- the further loss function comprises an expectations of a distance, such as a mean squared error, between the first input variable and a reference value, based on the first input variable samples.

6. A method (400) as in any of the preceding claims, wherein the CVAE model (10) comprises
- one or more generators, configured to obtain one or more of the first and the second input variable samples by generating the one or more of the first and the second input variable samples; and/or
- one or more prior networks (13.1, 13.2), configured to generate the conditional prior distribution and/or the further conditional prior distribution.

7. A method (400) as in claim 6, wherein one or more of the one or more generators and/or the one or more prior networks (13.1, 13.2) are parameterized by one or more model parameters of the CVAE model (10), wherein the model parameters are updated during training (17).

8. A method (400) as in any of the preceding claims, wherein
- the conditional distribution is further conditioned on the first input variable, and/or
- the further conditional distribution is further conditioned on the second input variable.

9. A method (400) as in any of the preceding claims, wherein the encoder (14), the decoder (16.1) and/or the further decoder (16.2) are parameterized by one or more model parameters of the CVAE model (10), and the method (400) further comprises updating (440) the model parameters during the training of the CVAE model (10).

10. A method (500) of using a CVAE model (10) for performing a first (121) and a second application task (122) of a computer-controlled system (110), wherein the CVAE model (10) is trained using a method (400) according to any of the preceding claims, the method (500) of using the CVAE model (10) comprising
- using the decoder (16.1), performing (510) the first application task (121) of the computer-controlled system (110); and
- using the further decoder (16.2), performing (520) the second application task (122) of the computer-controlled system (110).

11. A method (500) as in claim 10, further comprising one or more of
- using a prior network (13.1, 13.2), generating (540) a conditional prior distribution of a latent space variable conditioned on the first input variable and using the decoder (16.1) based on the conditional prior distribution, and/or, generating (550) a further conditional prior distribution of the latent space variable conditioned on the second input variable and using the further decoder (16.2) based on the further conditional prior distribution;
- generating (560) a conditional distribution of the first input variable, conditioned on the second input variable, and/or a conditional distribution of the second input variable, conditioned on the first input variable;
- generating (570) counterfactual data for the CVAE model (10), such as a counterfactual for the second input variable given a reference for the first input variable; a counterfactual for the second input variable given a reference for a pair of the first and the second input variable; a counterfactual for the first input variable; or a counterfactual for the first input variable given a reference for the second input variable;
- generating (580) training data for a further training of the CVAE model (10).

12. A method (500) as in claim 10 or 11, wherein
- the first application task (121) comprises a data generation task;
- the second application task (122) comprises anomaly detection;
- the decoder (16.1) is configured to reconstruct one or more of the first (12.1) and the second type of data (12.2); and
- the further decoder (16.2) is configured to, based on an output of the decoder (16.1), switch (530) to a different execution mode of the computer-controlled system (110).

13. A method (400, 500) as in any of the preceding claims, wherein at least one of the first type of data (12.1) and the second type of data (12.2) comprises sensor data, for example, one or more of: image data, such as digital image data, video data, radar, LiDAR, ultrasonic data, ultrasonic data, motion data, or thermal images; audio data, such as a sound signal; text data; trajectories on manifolds; and meta-type data such as tensors, e.g., image tensors;
wherein
- the first application task (121) comprises an object detection or a line detection in an environment, such as the driving context (11.1) of a vehicle (100), and the second application task (122) comprises a motion prediction based on the object detection or the line detection in the environment, such as a trajectory (19.1) generation for the vehicle (100) based on the driving context (11.1) of the vehicle (100);
- one of the first (121) and the second application tasks (122) comprises a classification task of the sensor data, such as an image classification, or performing a semantic segmentation on the sensor data, and another of the first (121) and the second application tasks (122) comprises a regression task, such as a regression analysis regarding a distance, a velocity, and/or an acceleration of an object (116) in the sensor data;
- the first application task (121) comprises an anomaly detection in one or more of the first type of data (12.1) and the second type of data (12.2) in the sensor data, and the second application task (122) comprises a data-generation task based on the anomaly detection, such as a data reconstruction of one or more of the first type of data (12.1) and the second type of data (12.2) in the sensor data; and/or
- the first application task (121) comprises a generation and/or reconstruction of additional control signals of a same data type as the sensor data for controlling and/or operating a computer-controlled system (110), and the second application task (122) comprises controlling and/or operating the computer-controlled system (110) based on the generation and/or the reconstruction, such as switching (35, 530) from a first operation mode to a second operation mode.

14. A system (1140) comprising: one or more processors; and one or more storage devices storing instructions that, when executed by the one or more processors, cause the one or more processors to perform steps for a method (400, 500) according to any one of the preceding claims.

15. A transitory or non-transitory computer-readable medium (1000) comprising data (1020, 1021) representing instructions, which when executed by a processor system (1140) cause the processor system (1140) to perform one or more steps of a method (400, 500) according to any one of the preceding claims.
